Europäisches Patentamt

European Patent Office

Office européen des brevets

(11) Publication number: **0 211 080**
A1

(12)

# EUROPEAN PATENT APPLICATION

published in accordance with Art. 158(3) EPC

(21) Application number: 86900286.5

(22) Date of filing: 27.12.85

Data of the international application taken as a basis:

(86) International application number:
PCT/JP85/00729

(87) International publication number:
WO86/04131 (17.07.86 86/17)

(51) Int. Cl.⁴: **F 16 T 1/16**

(30) Priority: 27.12.84 JP 279612/84

(43) Date of publication of application:
25.02.87 Bulletin 87/9

(84) Designated Contracting States:
DE FR GB

(71) Applicant: MIYAWAKI INCORPORATED
1-30, Tagawa-Kita 2-Chome
Yodogawa-ku Osaka(JP)

(72) Inventor: KURODA, Masatomo
Miyawaki Incorporated 1-30, Tagawa-kita 2-chome
Yodogawa-ku, Osaka-shi Osaka 532(JP)

(74) Representative: Lehn, Werner, Dipl.-Ing. et al,
Hoffmann, Eitle & Partner Patentanwälte Arabellastrasse
4 (Sternhaus)
D-8000 München 81(DE)

(54) DISC TYPE STEAM TRAP.

(57) A disc type steam trap has operating members (15, 16) adapted to resiliently displace a valve element (11) to an opening position, which is spaced from valve seats (6, 7), while a steam machine is not in operation, and a bimetal (18) adapted to release the valve element when a high-temperature condensate flows into the trap. In order to prevent the bimetal (18) and its surrounding members from unnecessarily interfering with each other, the bimetal (18) is detachably fastened to the operating members (15, 16) to thereby ensure a smooth operation of the valve element (11).

FIG.2

EP 0 211 080 A1

## DISC-TYPE STEAM TRAP

### Technical Field

The present invention relates to a so-called disc-type steam trap wherein the valve element is disengaged from the valve seat and held in an open position in the inoperative state.

### Background Art

In a conventional disc-type steam trap, upon re-operation of steam appliances after an inoperative period, a disc-shaped valve element during the initial stage of the fluid passage is maintained seated on, and in contact with outer and inner valve seats which are formed in a valve seat member. Thus, when there is residual incondensible fluid, such as air or low temperature condensation, within the pressure chamber behind the valve seat member, the movement of the valve element into the open position, induced by the fresh condensation, may be disturbed with the resultant operation trouble or so-called "locking".

Consequently, there has been a proposal to dispose within the pressure chamber an annular bimetal with its diameter variable in accordance with the condensation temperature, and to provide a tapered guide member for causing the bimetal to generate an axial thrust upon variation in its diameter, whereby the valve element is forcedly spaced from the valve seat in the inoperative state of the disc-type steam trap or low temperature range of condensation. With such an arrangement, however, a considerable frictional force is applied between the bimetal and the tapered guide member, so that their relative movement tends be retarded. This results in difficulties in achieving a smooth and stable operation and a satisfactory durability.

In order to eliminate these difficulties, the applicant has proposed to provide an actuating member engageable with the valve element under the action of resilient force of a spring with its one end engaging the valve seat member, thereby to bias the valve element in a direction in which it is disengaged from both inner and outer peripheral valve seats. In accordance with increase in the condensation temperature, the actuating member is moved by the bimetal against the resilient force of the spring, i.e. in the direction in which the valve element engages the valve seats. There is further provided a cap member for defining behind the valve element a pressure chamber in which the actuating member and the bimetal are arranged. Such an arrangement is disclosed in Japanese Patent Application Laid-open Publication No. 58-180,896. Since, in this instance, it is not necessary to provide a tapered guide member applying the bimetal with undesired frictional force, the above-mentioned retardation in the relative movement can be avoided. On the other hand, however, it has been found that the applicant's proposal as above encounters still another problem.

More particularly, while the cap member has a different inner diameter in accordance with the outer diameter of the valve element and hence, with the discharge capacity of the steam trap, it is not advantageous to change the size of the bimetal from the viewpoint of production technology. Thus, in case of a steam trap having a large capacity, the cap member is formed with a recess in its end wall to accommodate the bimetal. In spite of such an arrangement, if the recess of the cap member cannot be properly adapted to the size of the bimetal due, for example, to manufacturing tolerance, there may take place an undesired dislocation of the bimetal in accordance with the orientation of the steam trap mounted in position. Such a dislocation of the bimetal may result in interference with adjacent elements, whereby the stroke movement of the valve element into its forced open position is disturbed.

Disclosure of the Invention

Therefore, it is an object of the present invention to improve the disc-type steam trap according to the above-mentioned proposal, thereby to completely eliminate adverse influences arising from the variation in the orientation of the steam trap.

According to the present invention, there is provided a disc-type steam trap comprising: a main body having an inlet port and an outlet port for condensation; a valve seat member having an inlet bore and an outlet bore which are communicated with said inlet port and outlet port, respectively, and an inner peripheral valve seat and an outer peripheral valve seat formed on respective one ends of said inlet bore and outlet bore; a valve element which is common to said valve seats and movable to be engaged with, or disengaged from said valve seats; a cap member defining a pressure chamber behind said valve seat member, for generating within said pressure chamber a pressure which serves to control the engaging and disengaging movement of said valve element with respect to said valve seats; an actuating member applied with a resilient force to be engaged with said valve element, for biasing said valve element in a direction in which it is disengaged from said valve seats; a bimetal responsive to increase in temperature of said condensation within said pressure chamber to apply said actuating member with a force acting in opposition to said resilient force; and securing means for detachably securing said bimetal to said actuating member, while maintaining a coaxial relationship therebetween; said actuating member, bimetal and securing means being arranged within said pressure chamber.

## Brief Description of the Drawings

Figs. 1A and 1B are sectional views of a conventional disc-type steam trap mounted in position with different orientation; and

Figs. 2 and 3 are sectional views of the disc-type steam trap according to certain embodiments of the present invention.

## Detailed Explanation of the Invention

The present invention will now be explained in greater detail, by referring to the accompanying drawings.

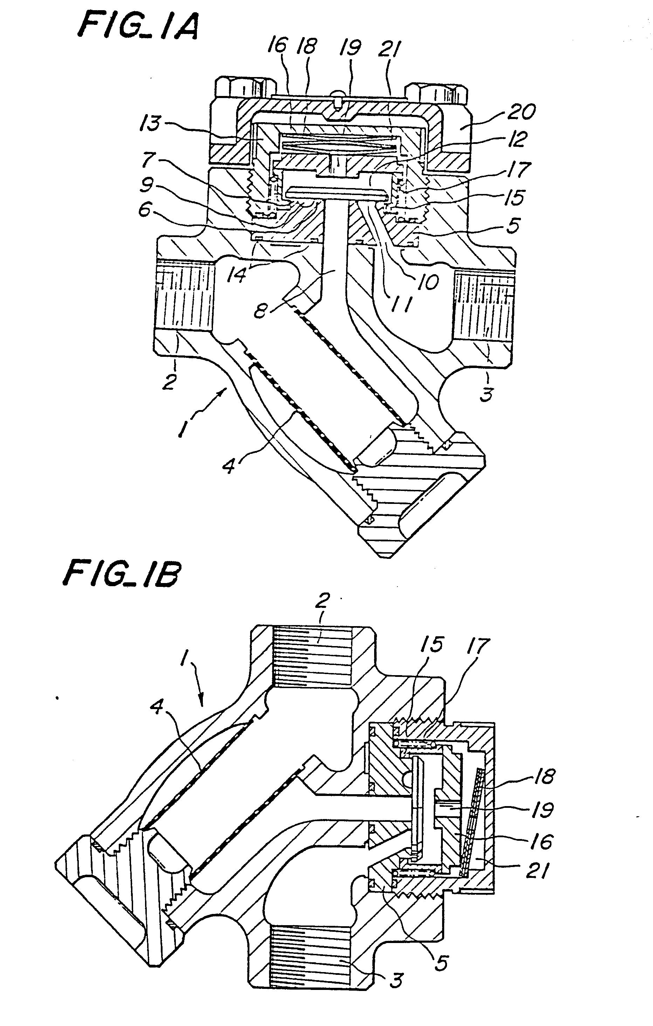

There is shown, in Figs. 1A and 1B, a conventional disc-type steam trap based on which the present invention has been conceived. This steam trap includes a main body 1 formed with an inlet port 2 and an outlet port 3 which are arranged with a linear alignment, for example. Within the main body 1, a substantially cylindrical-shaped strainer element 4 is arranged on the inlet port side. A valve seat member 5 is accommodated within the main body, which is formed with inner and outer peripheral valve seats 6, 7 on its surface corresponding to the outer surface side of the main body 1. An inlet bore 8 terminating at the inner peripheral valve seat 6 is arranged such that its upstream end is opposed to the outer surface of the strainer element 4, thereby to communicate the inlet bore 8 with the inlet port 2. An annular groove 9 is formed between the valve seats 6, 7, while an outlet bore 10 which opens into the bottom of the annular groove 9 is communicated with the outlet port 3. The valve seat member 5 is combined with a disc-like valve element 11 whose outer diameter is made slightly greater than that of the valve seat member 5. A cap member 13 is threadedly connected to the main body 1, to define a pressure chamber 12 behind the valve element 11 and to secure the valve seat member 5 to the main body 1 with a gasket 14 therebetween.

The outer periphery of the valve element 11, which is larger in diameter than the valve seat member 5, projects radially outwardly beyond the valve seat member 5. There is provided an actuating member for disengaging the valve element 11 from the valve seats 6, 7, which is constituted by two portions, i.e. a cylindrical portion 15 having on its one end radially inwardly protruding projections adapted to be brought into contact with that side of the outer periphery of the valve element which opposes to the valve seat member 5, as well as a disc-like portion 16 arranged on the other end of the cylindrical portion 15 in opposition to the valve element 11. This actuating member is biased by a compression coil spring 17 in a direction corresponding to the open position of the valve element 11, which spring is arranged between the valve seat member 5 and the actuating member. Furthermore, a bimetal 18 is arranged adjacent to the actuating member, for applying the actuating member with an axial thrust directed in opposition to the resilient force of the spring 17, upon increase in the condensation temperature. The bimetal 18 may include two pairs of mutually superimposed circular bimetal pieces with their low expansion sides opposed to each other, and high expansion sides arranged remote from each other. The valve element 11, the actuating member constituted by the cylindrical portion 15 and the disc-like portion 16, the spring 17 as well as the bimetal 18 are accommodated within the pressure chamber 12 defined by the cap member 13. The disc-like portion 16 of the actuating member has a center bore 19 extending therethrough, and may be formed integrally with the cylindrical portion 15. Furthermore, the cap member 13 may be covered by a cover member 20 secured to the main body.

Operation of the disc-type steam trap constructed as above is explained below. During the period in which the operation of the steam appliance is interrupted, the valve element 11 is disengaged from the valve seats 6, 7 and maintained in its open position by the actuating member acted upon by the coil spring 17. Thus, as the fluid supply is re-started, and the inlet port 2 of the steam trap is supplied with air in the discharge pipe line and successive low temperature condensation from the steam appliance through the pipe line, these low temperature fluids are permitted to flow into the pressure chamber 12 through the inlet bore 8. The fluids are passed through the pressure chamber 12 and the outlet bore 10, and discharged from the outlet port 3.

As the low temperature fluids are discharged, and condensation with a gradually higher temperature is supplied to the steam trap, the bimetal 18 is heated and undergoes an expansion movement in the axial direction. By this expansion movement, the actuating member is moved toward the valve seat member 5, against the resilient force of the coil spring 17, to release the valve element 11 which has been retained in the open position.

The valve element is maintained released from the retention during the operation of the steam appliance, i.e. so long as the steam trap is supplied with high temperature condensation. And, in such a state, the valve element 11 controls the discharge of the fluid in response to the temperature of condensation flowing through the pressure chamber 12 of the steam trap, in a manner known as thermodynamic operation.

Furthermore, upon decrease in temperature of condensation supplied to the steam trap, due to the interruption or termination of the operation of the steam appliance, the bimetal 18 restores from the expanded state so that the actuating member will no longer be applied with the axial thrust. Consequently, the actuating member urged by the resilient force of the coil spring 17 causes the valve element 11 to be disengaged from the valve seats 6, 7 and to move toward the open position, and maintains the valve element 11 in the open position. As a result, the inlet bore 8 and the outlet bore 10 are forcedly maintained in communication with each other, so that it is possible to avoid an undesired stay of incondensible fluid within the pressure chamber, as well as operation troubles arising therefrom.

As mentioned hereinbefore, in order for the bimetal of a same size to be incorporated into the steam trap with different discharge capacity, steam traps with a large capacity may be formed, in the end wall of the cap member 13, with a recess 21 for accommodating the bimetal. In this instance, when the recess 21 is not properly adapted with the bimetal, and the steam trap is mounted in position with an orientation in which the axis of the bimetal 18 is directed horizontally, for example, there is a possibility that the bimetal 18 moves out of the recess 21 and interferes with neighbouring elements, whereby the valve element 11 cannot be forcedly moved into the open position. The present invention has been conceived to resolve such a problem.

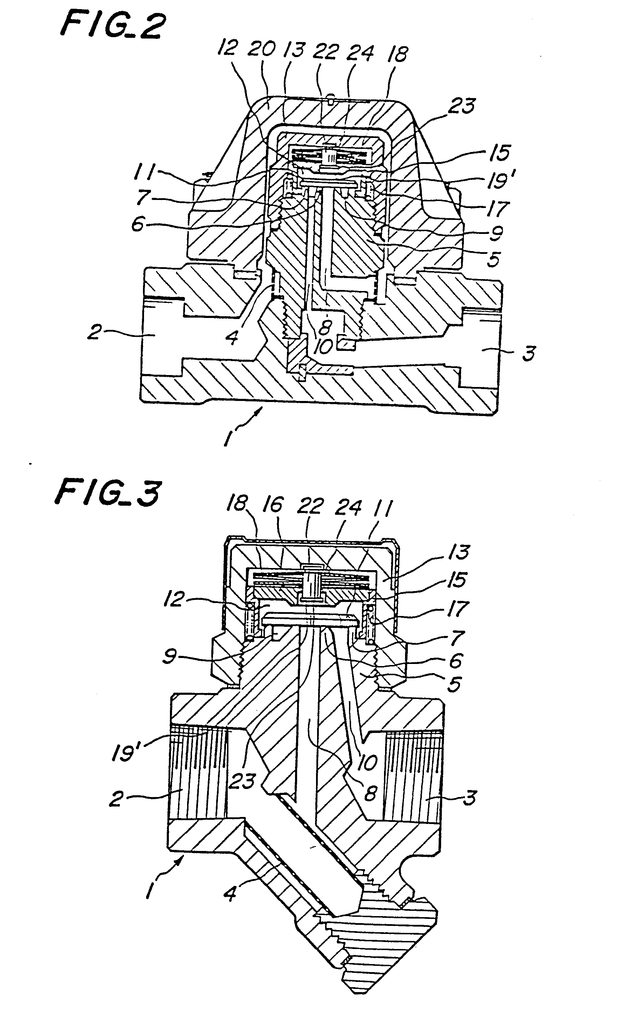

Figs. 2 and 3 illustrate embodiments of the disc-type steam trap according to the present invention, wherein the same reference numerals as used with respect to the above-mentioned conventional structure denote corresponding elements so that an overlapping explanation will be omitted.

In the present invention, the bimetal 18 is maintained coaxially with, and detachably secured to the actuating member 15, 16. More particularly, in the embodiments shown in Figs. 2 and 3, the center bore in the disc-like portion 16 of the actuating member is formed as a stepped bore 19', in which is arranged the head 23 of a stud 22. The stud 22 is passed through the stepped bore 19' and the bimetal 18, and has its free end secured with a snap ring 24 to retain the bimetal 18 integrally with the actuating member. Fig. 2 shows one embodiment of the present invention as applied to a steam trap with a relatively large capacity, while Fig. 3 shows another embodiment of the present invention as applied to a smaller steam trap having its valve seat member 5 formed integrally with the main body 1.

The operation of the steam trap according to the above-mentioned embodiments of the present invention is essentially the same as that of the conventional structure shown in Figs. 1A and 1B. The difference resides in that, in the present invention, the valve element can always be moved in a required direction irrespectively of the orientation of the steam trap. That is, by securing the bimetal 18 integrally with the actuating member 15, 16 by means of the stud 22, it becomes possible to prevent interference of the bimetal 18 with its neighbouring elements, which would otherwise disturb the movement of the valve element 11. This assures a smooth operation of the valve element 11. Moreover, the bimetal 18 can be easily secured to, or removed from the actuating member of a desired size, and incorporated into the cap member 13 integrally with the actuating member 15, 16, so that it becomes possible to considerably improve the productivity.

The present invention is thus advantageous in that the above-mentioned object can be achieved in a convenient and effective manner.

Claims:

1.  A disc-type steam trap comprising: a main body (1) having an inlet port (2) and an outlet port (3) for condensation; a valve seat member (5) having an inlet bore (8) and an outlet bore (10) which are communicated with said inlet port (2) and outlet port (3), respectively, and an inner peripheral valve seat (6) and an outer peripheral valve seat (7) formed on respective one ends of said inlet bore (8) and outlet bore (10); a valve element (11) which is common to said valve seats (6, 7) and movable to be engaged with, or disengaged from said valve seats; a cap member (13) defining a pressure chamber (12) behind said valve seat member (5), for generating within said pressure chamber (12) a pressure which serves to control the engaging and disengaging movement of said valve element (11) with respect to said valve seats (6, 7); an actuating member (15, 16) applied with a resilient force to be engaged with said valve element (11), for biasing said valve element (11) in a direction in which it is disengaged from said valve seats (6, 7); a bimetal (18) responsive to increase in temperature of said condensation within said pressure chamber (12) to apply said actuating member (15, 16) with a force acting in opposition to said resilient force; and securing means (19', 22, 23, 24) for detachably securing said bimetal (18) to said actuating member (15, 16), while maintaining a coaxial relationship therebetween; said actuating member (15, 16), bimetal (18) and securing means (19', 22, 23, 24) being arranged within said pressure chamber (12).

2.    The disc-type steam trap as claimed in claim 1, wherein said actuating member comprises a cylindrical portion (15) engageable with said valve element (11) under the action of said resilient force, and a disc-like portion (16) arranged on that end of said cylindrical portion (15) which opposes to said bimetal, said bimetal (18) being secured to said disc-like portion (16).

3.    The disc-type steam trap as claimed in claim 2, wherein said disc-like portion (16) of said actuating member is formed with an axially extending central bore (19'), said securing means including a stud (22) passed through said bore with one end thereof formed as a head (23), and a snap ring (24) secured to another end of said stud and cooperating with said head to detachably secure said bimetal (18) to said actuating member coaxially.

FIG_IA

FIG_IB

## FIG_2

## FIG_3

# INTERNATIONAL SEARCH REPORT

International Application No PCT/JP85/00733

## I. CLASSIFICATION OF SUBJECT MATTER (if several classification symbols apply, indicate all) ³

According to International Patent Classification (IPC) or to both National Classification and IPC

Int.Cl⁴      F16T1/16

## II. FIELDS SEARCHED

### Minimum Documentation Searched ⁴

| Classification System | Classification Symbols |
|---|---|
| IPC | F16T1/16, F16T1/08 |

Documentation Searched other than Minimum Documentation
to the Extent that such Documents are Included in the Fields Searched ⁵

| | | |
|---|---|---|
| Jitsuyo Shinan Koho | 1920 | 1986 |
| Kokai Jitsuyo Shinan Koho | 1971 | 1986 |

## III. DOCUMENTS CONSIDERED TO BE RELEVANT ¹⁴

| Category* | Citation of Document, ¹⁶ with indication, where appropriate, of the relevant passages ¹⁷ | Relevant to Claim No ¹⁸ |
|---|---|---|
| A | JP, A, 58-180896 (Miyawaki Steam Trap Mfg. Co., Ltd.) 22 October 1983 (22. 10. 83) (Family: none) | 1-3 |
| A | JP, A, 49-135222 (Miyawaki Koresuke) 26 December 1974 (26. 12. 74), Figs. 4 to 5 (Family: none) | 1-3 |

* Special categories of cited documents: ¹⁵

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search ² | Date of Mailing of this International Search Report ² |
|---|---|
| March 10, 1986 (10. 03. 86) | March 17, 1986 (17. 03. 86) |
| International Searching Authority ¹ | Signature of Authorized Officer ¹⁰ |
| Japanese Patent Office | |

Form PCT/ISA/210 (second sheet) (October 1981)